# EUROPÄISCHE PATENTSCHRIFT

(11) **EP 2 151 474 B1**
(45) Veröffentlichungstag und Bekanntmachung des Hinweises auf die Patenterteilung: **12.11.2014**
(21) Anmeldenummer: 09405127.3
(22) Anmeldetag: 24.07.2009
(51) Int. Cl.: C08K 3/34, C08L 95/00, C04B 24/36

(54) **Bitumen-Konglomerat zur Heissverlegung**
Conglomerate of bitumen with improved heat resistance
Aggloméré de bitume ayant une résistance à la chaleur améliorée

(30) Priorität: 29.07.2008 CH 11872008
(43) Veröffentlichungstag der Anmeldung: 10.02.2010
(73) Patentinhaber: Mondini, Alessandro, 6616 Losone (CH)
(72) Erfinder: Mondini, Alessandro, 6616 Losone (CH)
(74) Vertreter: Zardi, Marco

(56) Entgegenhaltungen:
- EP-A1- 0 952 188
- DE-A1- 4 034 321
- GB-A- 2 279 957

## Beschreibung

Die vorliegende Erfindung betrifft ein Bitumen-Konglomerat, das zum Erstellen von Strassenbelägen heiss ausgebracht wird, gemäss der Beschreibung im Oberbegriff des Patentanspruchs 1.

Die an Asphalt-Strassenbeläge gestellten Anforderungen sind fortlaufend gestiegen, insbesondere wenn es sich um Autobahnen handelt, wegen der zunehmenden Anzahl der Fahrzeuge, dem zunehmenden Gewicht der Lastwagen, der Geschwindigkeit der Fahrzeuge, und so weiter. Das Interesse konzentrierte sich daher vorab auf die Eigenschaften der mechanischen Widerstandsfähigkeit des Bitumen-Belags gegen Beanspruchungen, die oft mit den Elastizitäts-Eigenschaften des Materials zusammenhängen. So wurden zum Erreichen dieses Ziels vorgeschlagen, dem Gemisch von Bitumen und inerten Zuschlagsstoffen synthetische Elastomer-Fasern verschiedenster Art (Polyethylen, Polypropylen, Polyvinyl, Polyester, usw.) beizumischen. Solche Fasern, mit einer Länge von bis zu 10 cm oder mehr, haben den Zweck, die das Gemenge bildenden Partikel (Sand, Feinsplitt, usw.) zu verbinden und somit die mechanische Festigkeit des Belags beträchtlich zu verbessern. Beispiele solcher Anwendungen sind in den folgenden Patentschriften beschrieben: US3'753'938, US3'505'260, FR1'525'901, EP0082130A1. Das letztgenannte Dokument betrifft insbesondere die Zusammensetzung von Konglomeraten aus Zement und Asphalt, die synthetische Fasern sowie Blähton-Partikel enthalten. Auch in diesem Fall dient alles dazu, die Widerstandsfähigkeit des Bitumen-Belags gegen Druck, Temperaturschwankungen, Wärmeausdehnung, usw., zu verbessern.

Die Verwendung von sogenannten leichten Inertstoffen, wie vulkanische Asche, Bimsstein, Blähton, zusammen mit den schweren Inertstoffen ist auch in anderen Dokumenten beschrieben, im Zusammenhang mit der Möglichkeit, widerstandsfähige Gemische zu schaffen, die geringeres Gewicht aufweisen und leichter ausgebracht werden können. In der IT1169744 ist beispielsweise ein kalt verarbeitbares Bitumen-Konglomerat für den Strassenunterhalt beschrieben, das den Vorteil aufweist, dass es über einen Zeitraum von mehreren Monaten in aktivem Zustand aufbewahrt werden kann, und welches ausser den üblichen Komponenten schwerer Inertstoffe und Bitumen mindestens einen leichten Inertstoff (wie Blähton) enthält, sowie ein verflüssigendes oder flusserleichterndes Additiv enthält. Ein solches Additiv dient dazu, dem Konglomerat seine Eigenschaften der Plastizität in kaltem Zustand und der Konservierbarkeit zu verleihen und das Konglomerat jahrein jahraus für kleine Strassen-Unterhaltsarbeiten (Ausfüllen von Rissen und Löchern, usw.) ideal geeignet zu machen.

Das Beimengen eines leichten Inertstoffes hat auch das erklärte Ziel, das Konglomerat leichter zu machen, was das Ausbringen erleichtert ohne jedoch die Eigenschaften bezüglich Widerstandsfähigkeit des Konglomerates gegen Druck und generell mechanische Beanspruchung zu beeinträchtigen. Das Beimengen eines leichten Inertstoffes hat hier also einen genau umschriebenen Zweck und ist mit der speziellen Anwendung verbunden, für die das Konglomerat vorgesehen ist.

Im allgemeinen kann bestätigt werden, dass das Beimengen synthetischer Fasern zusammen mit wenigstens einem gewissen Prozentanteils an leichten Inertstoffen vorgeschlagen wurde, um eine Verbesserung der mechanischen Eigenschaften des Bitumen-Belags oder dessen erleichterten Ausbringens zu erreichen; allerdings mit dem grossen Nachteil eines hohen Preises, weshalb solche Gemenge in der Praxis wenig Anwendung gefunden haben. Ausserdem wird in den genannten Dokumenten des Standes der Technik auf das Lärmproblem keinerlei Gewicht gelegt, beziehungsweise auf Schallschluck-Eigenschaften, die heute ein Strassenbelag prioritär aufweisen muss. Der von den Fahrzeugen erzeugte Lärm ist zu einem Problem grosser Aktualität geworden, zu dessen Lösung sehr viel investiert wird (Tunnels, Schallschluckwände, usw.).

Die vorliegende Erfindung betrifft, und darin unterscheidet sie sich ganz klar in der Zielsetzung vom bisher Bekannten, die Möglichkeit, die von den Pneus der Fahrzeuge verursachten Lärm-Emissionen zu reduzieren, dank der Wahl eines Typs von Bitumen-Konglomerates, das heiss auszubringen ist (zwischen 70°C und 250°C), zum Erstellen von Strassenbelägen grosser mechanischer Widerstandskraft, die daher besonders gut geeignet sind für Autobahnen mit hohem Verkehrsaufkommen in dicht besiedelten Zentren.

Hier sei unterstrichen, dass für das Erstellen des Unterbaus für Autobahnen heute schallschluckende Belagsmaterialien auf Basis entwässernder Bitumen-Mischungen verwendet werden, die jedoch den Nachteil aufweisen, dass sie sich zunehmend verstopfen, was den Lärmminderungs-Effekt vermindert. Ferner eignen sich diese Mischungen nicht zur Anwendung in bewohnten Zentren und auf Nebenstrassen, da sich bei der reduzierten Geschwindigkeit der Fahrzeuge (nämlich bei unter 80 km/h) der erwünschte "Saugeffekt" stark verringert, den der Reifen im Kontakt mit dem Strassenbelag ausübt, weshalb die Porosität des Belags, dank der er schallabsorbierend wird, wegen der Verstopfung der Poren abnimmt und der Belag seine schallschluckende Eigenschaft einbüsst. Darüber hinaus bewirkt ein solches Zusetzen der Poren eine Verstärkung der Gleitgefahr auf der Strasse, deren Auswirkungen man sich leicht vorstellen kann. Diese Gefahr der Porenverstopfung besteht bei allen bekannten nicht entwässernden Belägen, die sich mit reduziertem Sandgehalt und grossem Kiesanteil einer einzigen Korngrösse (beispielsweise DRA 11 - Drainasfhalt gemäss der Schweizer Norm SN 67 1969) unterscheiden.

Das Fehlen der dazwischen liegenden Korngrössen und der geringe Sandgehalt bewirken, dass die Oberflächenstruktur des Bitumen-Belags ausschliesslich von den Flächen des verwendeten Inertstoffes gebildet wird, so dass sich rasch Glätte-Probleme zeigen, die den Strassenbelag gefährlich machen.

Die vorliegende Erfindung setzt sich daher zum Ziel, ein Bitumen-Konglomerat vorzuschlagen, das heiss (zwischen 70°C und 250°C) auszubringen ist, und das einerseits die verlangten mechanische Widerstandsfähigkeit gegen höchste Beanspruchungen aufweist (Widerstand gegen Verformung, Widerstand gegen Rissbildung, Widerstand gegen Abnützung) und auch das Erreichen einer dauerhaft erhöhten Rauhigkeit sowie hauptsächlich eine Schalldämmung erlaubt. Im weitern ist es ein erklärtes Ziel der vorliegenden Erfindung, die vorgenannte Erscheinung der Porenverstopfung auszuschalten oder mindestens wesentlich zu verringern und somit die erfindungsgemässen Konglomerate auch bei niedrigeren Fahrgeschwindigkeiten in städtischen Zentren und auf Nebenstrassen anwendbar zu machen.

Alle diese Zielsetzungen werden erfüllt mit einem Bitumen-Konglomerat, das die Eigenschaften gemäss dem charakterisierenden Teil des Patentanspruchs 1 aufweist.

Die praktische Anwendung hat gezeigt, dass dank der Verwendung eines leichten Inertstoffes, insbesondere von Blähton mit einem Mengenanteil im Rahmen der genannten Grenzen, eine Verringerung der Schallemission von der Grössenordnung von etwa drei Dezibel, gemessen nach der französischen Norm NF531119-2, erreicht werden kann.

Die Beimengung von Gummipulver und/oder Gummi-Granulat im Rahmen der im Patentanspruch 1 vorgesehenen Prozentanteile erlaubt sodann eine Verbesserung der Elastizitäts-Eigenschaften des Strassenbelags und der Dämpfung der Vibrationen, welche die Fahrzeuge insbesondere im Schwerverkehr verursachen.

Die Patentansprüche 2 und 3 betreffen bevorzugte Ausführungsvarianten des erfindungsgemässen Konglomerats, während sich der Patentanspruch 4 auf ein Verfahren zur Herstellung und zum Ausbringen des Konglomerats gemäss der vorliegenden Erfindung bezieht.

Der grundsätzliche Unterschied zwischen dem Bitumen-Konglomerat gemäss der vorliegenden Erfindung und den gemäss dem Stand der Technik bekannten besteht darin, dass keine verbindenden synthetische Fasern vorhanden sind. Dies erfordert einerseits das heisse Ausbringen des Belags, erlaubt aber das Erreichen von Strassenbelägen grosser Widerstandsfähigkeit und Elastizität auch ohne Verwendung teurer synthetischer Fasern, und die eine beträchtliche Dämpfung der Schall-Emissionen sicherstellen.

Diese Schalldämpfung bleibt dauerhaft erhalten, weil die Poren in der Oberfläche von einem harten leichten Material gebildet werden, das automatisch zur Oberfläche hin zu wandern sucht und grosse Widerstandsfähigkeit gegen Abnützung gewährleistet, wobei kein Verstopfen der Poren auftritt, die unerwünschte Glätte des Strassenbelags hervorruft, mit der damit verbundenen Verminderung der Haftung der Reifen bei Regen und der Zunahme der Lärm-Emissionen.

Der prozentuale Anteil an leichtem Inertmaterial, sei dies Bimsstein, Vulkanasche oder Blähton, kann in eher weiten Grenzen variieren (von 6% bis 50%), je nach der Art des herzustellenden Strassenbelags (raue und entwässernde Strassenoberfläche für hohe Fahrgeschwindigkeiten, weniger raue Oberflächen für weniger hohe Fahrgeschwindigkeiten in dichter besiedelten Gebieten, usw.). auch die Korngrössenverteilung des leichten Inertstoffs kann in eher weiten Grenzen variieren (zwischen 0.1 und 16 mm, vorzugsweise Korngrössen zwischen 3 und 10 mm). Auch die Wahl der bestgeeigneten Korngrössenverteilung hängt vom speziellen Verwendungszweck des Bitumen-Konglomerates ab. Daher ist es Aufgabe des Fachmanns auf dem Gebiet, basierend auf eigener Erfahrung und geeigneter praktischer Versuche den Prozentanteil an leichtem Inertmaterial und die für den vorgesehenen Verwendungszweck bestgeeignete Korngrössenverteilung zu wählen.

Im Sinn eines blossen Beispiels ist im folgenden eine Rezeptur für ein Bitumen-Konglomerat gemäss der vorliegenden Erfindung angegeben, mit welcher gute Resultate bezüglich Schalldämmung auf einem vielbefahrenen Autobahn-Teilstück erzielt wurden.

| | Material | Möglicher Prozentanteil | Verwendete Menge |
|---|---|---|---|
| 1 | Füllstoff (Steinmehl) | (2+40%) 14% | 140 kg |
| 2 | Sand | 20% | 200 kg |
| 3 | Feinsplitt | (Korngrössen 4/8 mm) | 374 kg |
| | | 37.4% | |
| 4 | Blähton | (1+70%) 18% | 180 kg |
| 5 | Bitumen | (2+12) 7.6% | 76 kg |
| 6 | Gummi-Granulat | (0.5+5%) 3% | 30 kg |
| | | Total | 1000 kg |

| | | | |
|---|---|---|---|
| 1 + 2 + 3 = schwere Inertstoffe 71.4% des Totals | | | |

Die Wahl des Prozentanteils des leichten Inertmaterials und des Gummi-Granulats muss natürlich auch den wirtschaftlichen Aspekt berücksichtigen, weil diese Materialien bei gleichem Volumen sehr viel teurer sind als die schweren Inertstoffe. Die praktische Erfahrung hat gezeigt, dass ein hoher Prozentanteil an Blähton auch wirtschaftlich gerechtfertigt sein kann, beispielsweise für den Bitumen-Belag auf Brücken, wo die Oberflächen-Rauhigkeit wegen der besonderen Frost-Probleme grössere Bedeutung hat. In solchen Fällen kann ein Gussasphalt mit einem grossen Anteil Blähton (40 oder mehr Gewichtsprozente), der sich als leichtes Material während dem Heiss-Ausbringen des Konglomerats wegen des "Auftriebs" automatisch gegen die Oberfläche hin verlagert, zur Anwendung kommen.

Hierbei handelt es sich um ein ganz spezielles Anwendungsbeispiel des erfindungsgemässen Konglomerats; solche Möglichkeiten, immer im Rahmen der vorliegenden Erfindung, kennt der Fachmann auf dem Gebiet, der die einzelnen Prozentanteile den besonderen Anforderungen an die vorgesehene Verwendung anzupassen sucht.

Bezüglich eines Verfahrens zur Herstellung und zum Ausbringen des Bitumen-Konglomerats genügt der Hinweis, dass dieses ähnlich wie die heiss zu verarbeitenden Konglomerate gemäss dem Stand der Technik vorbereitet und bei einer Temperatur zwischen 70°C und 250°C zum Einbauort transportiert wird, so dass die erforderliche Fliessfähigkeit stets gewährleistet ist. Die Herstellung eines solchen Bitumen-Konglomerats unterscheidet sich, abgesehen von der Beimengung des vorgesehenen Prozentanteils an leichtem Inertmaterial, nicht von jener der seit langer Zeit für heiss auszutragende Bitumen-Konglomerate praktizierten, und auch nicht von jener für warme und lauwarme Konglomerate der neuen Generation, weshalb sich weitere Erklärungen erübrigen.

Gemäss einer Ausführungsvariante der vorliegenden Erfindung mit dem Zweck, die Elastizität des Strassenbelags zu erhöhen, ist sodann vorgesehen, dem leichten Inertmaterial einen gewissen Prozentanteil an Gummistaub und/oder Gummi-Granulat beizumengen.

## Patentansprüche

1. Heiss auszubringendes Bitumen-Konglomerat zum Erstellen dauerhafter Strassenbeläge von der Art, die ausser Bitumen mindestens einen Anteil eines schweren Inertmaterials enthalten, dessen spezifisches Gewicht im Material höher ist als 1000 kg/m³ in Pulverform als Steinmehl als Füllmaterial und/oder Sand und/oder Feinsplitt,
**dadurch gekennzeichnet, dass**
es mindestens einen Anteil eines leichten Inertmaterials enthält, dessen Raumgewicht in der Schüttung unter 1100 kg/m³ liegt, und dessen Gewichtsprozentanteil zwischen 6% und 50% des Gesamtgewichts des Konglomerats liegt, sowie dass es auch einen Anteil Gummistaub und/oder Gummi-Granulat enthält dessen Prozentanteil zwischen 0.5% und 5% des Gesamtgewichtes des Konglomerats liegt.

2. Bitumen-Konglomerat gemäss dem Patentanspruch 1,
**dadurch gekennzeichnet, dass**
das leichte Inertmaterial ein natürlicher oder ein künstlicher Inertstoff ist wie Blähton, Bimsstein oder Vulkanasche.

3. Bitumen-Konglomerat gemäss den Patentansprüchen 1 oder 2,
**dadurch gekennzeichnet, dass**
das leichte Inertmaterial eine Korngrössenverteilung zwischen 0.1 und 16 mm, vorzugsweise zwischen 3 und 10 mm aufweist.

4. Verfahren zur Herstellung und zum Ausbringen des Bitumen-Konglomerats gemäss den Patentansprüchen 1 bis 3,
**dadurch gekennzeichnet, dass**
das Gemisch eines oder mehrerer schwerer Inertmaterialien, des Bitumens und des leichten Inertmaterials, und des Gummistaubs und/oder des Gummi-Granulats bei Temperaturen zwischen 80°C und 250°C heiss vermengt wird und nach allfälligen Transport zum Einbauort als fertiger Strassenbelag bei Temperaturen zwischen 70°C und 250°C heiss ausgebracht wird.

## Claims

1. A hot pour bitumen conglomerate for producing durable road pavements of the type containing, besides bitumen, at least a percentage of a heavy inert material, whose specific weight in the material is higher than 1000 kg/m³, in a powder form of stone powder such as a filler and/or sand and/or fine grit,
**characterized in that**
it contains at least a part of a light inert material, whose specific weight in the charge is lower than 1100 kg/m³, and whose percentage in weight is between 6% and 50% of total weight of conglomerate, and also contains a part of gum powder and/or gum granulate, whose percentage is between 0.5% and 5% of total weight of conglomerate.

2. A bitumen conglomerate according to claim 1,
**characterized in that**
the light inert material is a natural or synthetic inert like expanded clay, amber or volcanic ash.

3. A bitumen conglomerate according to claims 1 or 2,
**characterized in that**
the light inert material has a granulometric size distribution between 0.1 and 16 mm, preferably between 3 and 10 mm.

4. Method for producing and applying the bitumen conglomerate according to claims 1 to 3,
**characterized in that**
the mixture of one or more heavy inert materials, of the bitumen and of the light inert material, and of the gum powder and/or of gum granulate is hot mixed at temperatures between 80 °C and 250 °C and after possible transport to application site, is hot poured as finished road pavement at temperatures between 70 °C and 250 °C.

## Revendications

1. Canglomérat bitumineux destiné au coulage à chaud en vue de créer des revêtements de chaussées durables du type renfermant, outre du bitume, au moins une part d'un matériau inerte lourd dont le poids spécifique, dans le matériau, excède 1 000 kg/m³ sous une forme pulvérulente se présentant comme de la poussière de pierre en tant que substance de charge, et/ou comme du sable et/ou comme du gravillon,
**caractérisé par le fait**
**qu'**il renferme au moins une part d'un matériau inerte léger dont la masse volumique est inférieure à 1 100 kg/m³ dans le lit déversé, et dont le pourcentage pondéral se situe entre 6 % et 50 % du poids total du conglomérat ; et par le fait qu'il renferme également une part de poussière de caoutchouc et/ou de granulat de caoutchouc dont le pourcentage se situe entre 0,5 % et 5 % du poids total dudit conglomérat.

2. Conglomérat bitumineux selon la revendication 1,
**caractérisé par le fait que**
le matériau inerte léger est une substance inerte naturelle ou synthétique, telle que de l'agile expansé, de la pierre ponce ou de la cendre volcanique.

3. Conglomérat bitumineux selon les revendications 1 ou 2,
**caractérisé par le fait que**
le matériau inerte léger présente une distribution granulométrique comprise entre 0,1 est 16 mm, de préférence entre 3 et 10 mm.

4. Procédé affecté à la production et au coulage du conglomérat bitumineux conforme aux revendications 1 à 3,
**caractérisé par le fait que**
le mélange d'un ou plusieurs matériau(x) inerte(s) lourd(s), du bitume et du matériau inerte léger, et de la poussière de caoutchouc et/ou du granulat de caoutchouc, est amalgamé à chaud à des températures comprises entre 80 °C et 250 °C, puis coulé à chaud à des températures comprises entre 70 °C et 250°C, en tant que revêtement de chaussée prêt à l'emploi, après un éventuel transport vers le site de mise en oeuvre.
